# EUROPÄISCHE PATENTSCHRIFT

(11) **EP 2 212 540 B1**
(45) Veröffentlichungstag und Bekanntmachung des Hinweises auf die Patenterteilung: **29.02.2012**
(21) Anmeldenummer: 08842507.9
(22) Anmeldetag: 21.10.2008
(51) Int. Cl.: F02M 25/07, F01N 5/02, F02B 37/00

(54) **VORRICHTUNG UND VERFAHREN ZUR RÜCKFÜHRUNG VON ABGAS EINES VERBRENNUNGSMOTORS**
APPARATUS AND METHOD FOR RETURNING EXHAUST GAS OF AN INTERNAL COMBUSTION ENGINE
DISPOSITIF ET PROCÉDÉ POUR LA RÉINJECTION DE GAZ D'ÉCHAPPEMENT D'UN MOTEUR À COMBUSTION INTERNE

(30) Priorität: 26.10.2007 DE 102007051659
(43) Veröffentlichungstag der Anmeldung: 04.08.2010
(73) Patentinhaber: Behr GmbH & Co. KG, 70469 Stuttgart (DE)
(72) Erfinder: OBERLECHNER, Christian, 73240 Wendlingen (DE); PFISTER, Florian, 71706 Markgröningen (DE); PANTOW, Eberhard, 71364 Winnenden (DE)
(74) Vertreter: Grauel, Andreas
(86) Internationale Anmeldenummer: PCT/EP2008/008888
(87) Internationale Veröffentlichungsnummer: WO 2009/053025

(56) Entgegenhaltungen:
- EP-A- 1 754 879
- WO-A-2006/123992
- WO-A-2007/055644
- WO-A-2007/073769
- WO-A-2008/066482
- DE-A1- 10 053 591
- GB-A- 2 428 465
- JP-A- 2001 342 911
- JP-A- 2002 195 106
- JP-A- 2006 105 048
- JP-A- 2006 132 440
- JP-A- 2006 207 467

## Beschreibung

Die Erfindung betrifft eine Vorrichtung zur Rückführung von Abgas eines Verbrennungsmotors nach dem Oberbegriff des Anspruchs 1 sowie ein Verfahren zur Rückführung von Abgas eines Verbrennungsmotors.

Es ist bekannt, Abgas eines Verbrennungsmotors abzuzweigen und nach einer Kühlung als Beimischung wieder zuzuführen. Als Beispiels hierzu sei die JP 2006 132 440 A, die JP 2006 207 467 A oder die WO 2007/073769 A1 genannt. Hierdurch werden unter anderem Reduzierungen von Schadstoffen wie Stickoxiden erreicht. Einer der verantwortlichen Effekte ist dabei die Verringerung der Verbrennungs-Spitzentemperatur insbesondere bei Dieselmotoren. Gegenwärtig werden in der Praxis Rückführraten von 30% bei Volllast erreicht. Eine weitere Erhöhung der Rückführraten ist in der Praxis unter anderem dadurch limitiert, dass ein zu hoher Wärmeeintrag in den oder die Abgaskühler resultiert.

Es ist die Aufgabe der Erfindung, eine Vorrichtung und ein Verfahren zur Rückführung von Abgas anzugeben, das auf einfache Weise eine hohe Rückführrate von Abgas ermöglicht.

Diese Aufgabe wir für eine eingangs genannte Vorrichtung erfindungsgemäß mit den kennzeichnenden Merkmalen des Anspruchs 1 gelöst. Regelmäßig liegt die Abgastemperatur niederdruckseitig des Verdichters unter der hochdruckseitigen Temperatur, so dass ein Teil der Wärme des hochdruckseitig abgezweigten rückzuführenden Abgasstroms an den niederdruckseitigen Abgasstrom erfindungsgemäß mittels eines Wärmeübertragers abgegeben werden kann. Hierdurch verringert sich die erforderliche Kühlleistung des Abgaskühlers bzw. die Rückführrate bei gegebenem Abgaskühler kann erhöht werden. Insbesondere können in der Praxis Rückführraten von mehr als 30% besonders vorteilhaft Rückführraten von mehr als 35% und besonders vorteilhaft Rückführraten von 40% oder mehr als 40% erreicht werden, ohne größere Änderung an bestehenden Abgaskühlem vorzunehmen.

In besonders bevorzugter Ausführungsform der Erfindung ist niederdruckseitig stromabwärts des Wärmeübertragers zumindest ein Mittel zur Abgas-Nachbehandlung, insbesondere aus der Gruppe Speicherkatalysator, Reduktionskatatysator oder Partikelfilter, vorgesehen. Da die herkömmliche Rückführung von Abgas auch zu einer Erniedrigung der Abgastemperatur nach Verdichter führt, kann bei weiterer Erhöhung der Rückführrate unter Umständen die zuverlässige Funktion der Mittel zur Abgas-Nachbehandlung in Frage gestellt sein. NOx-Speicherkatalysatoren benötigen wenigstens 100°C, Oxidations-Katalysatoren benötigen wenigstens 150°C, NOx-Katalysatoren für selektive katalytische Reduktion benötigen wenigstens 200°C und für die Regeneration eines NOx-Speicherkatalysators oder Abgas-Partikelfilters werden Temperaturen von mehr als 250°C erforderlich. Die erfindungsgemäße Vorrichtung bietet eine einfache Möglichkeit, um solche Temperaturen des nicht rückgeführten Abgases auch bei hoher Rückführrate noch erzielen zu können.

Bei einer bevorzugten Weiterbildung ist der niederdruckseitige Abgasstrom des Wärmeübertragers ein Teilstrom des niederdruckseitigen Abgasstroms des Verdichters. Besonders bevorzugt ist dabei der Teilstrom über ein Stellglied einstellbar. Hierdurch kann auf einfache Weise eine Leistungsregelung des Wärmeübertragers erfolgen. Zudem kann hierdurch erreicht werden, dass der Teilstrom auf eine besonders hohe Temperatur aufheizbar ist, um zum Beispiel bestimmte Prozesse bei einer nachgeschalteten Abgasreinigung beeinflussen.

Bei einer einfachen und zweckmäßigen Ausführungsform ist der Wärmeübertrager ein einteilig ausgebildeter Wärmetauscher ist, der mit hochdruckseitigem Abgasstrom und niederdruckseitigem Abgasstrom durchströmbar ist bzw. durchströmt ist bzw. durchströmt wird. Hierdurch wird eine unmittelbare Wärmeübertragung der Abgasströme mit einer einfachen Vorrichtung erreicht.

Alternativ kann der Wärmeübertrager aber auch einen niederdruckseitigen Wärmetauscher und einen hochdruckseitigen Wärmetauscher umfassen, die über ein Fluid thermisch verbunden sind. Hierdurch ergeben sich Möglichkeiten der räumlich getrennten Anordnung der Wärmeübertragungen der Abgasströme sowie eine einfache Möglichkeit der Regelung der Übertragungsleistung sowie einer Pufferung bzw. Vergleichmäßigung der Wärmeübertragung. Das Fluid, zum Beispiel ein flüssiges Kühlmittel, kann zudem bei Bedarf weitere Komponenten des Kraftfahrzeugs durchströmen.

Eine weitere vorteilhafte Ausführungsform sieht vor, dass der Wärmeübertrager ein Wärmerohr umfasst. Wärmerohre ermöglichen eine besonders effektive Wärmeübertragung insbesondere bei relativ geringen Temperaturunterschieden und können zudem zu einer Vergleichmäßigung der auf den niederdruckseitigen Abgasstrom übertragenen Wärmeleistung beitragen.

Allgemein bevorzugt ist der Abgaskühler ein indirekter Abgaskühler zur Übertragung von Wärme an einen Kühlmittelkreis, insbesondere einen Hauptkühlkreislauf des Verbrennungsmotors. Alternativ oder ergänzend kann es aber auch ein direkter Abgaskühler zur Übertragung von Wärme auf Umgebungsluft sein. In besonders bevorzugter Detailgestaltung ist dabei ein erster, indirekter Abgaskühler und ein zweiter, direkter Abgaskühler vorgesehen, wodurch eine besonders große Kühlleistung erreicht wird, die eine hohe Rückführrate ermöglicht.

In einer Ausgestaltung ist dabei ein erster, indirekter Abgaskühler und ein zweiter, indirekter Abgaskühler vorgesehen, wodurch eine besonders große Kühlleistung erreicht wird, die eine hohe Rückführrate ermöglicht.

Die Aufgabe der Erfindung wird für ein eingangs genanntes Verfahren zur Rückführung von Abgas eines Verbrennungsmotors erfindungsgemäß mit den Merkmalen des Anspruchs 11 gelöst. Bevorzugt findet dabei eine erfindungsgemäße Vorrichtung Verwendung. Die Übertragung von Wärme vom hochdruckseitigen Abgasstrom auf den niederdruckseitigen Abgasstrom ermöglicht eine verbesserte Kühlung des rückgeführten Abgases sowie die Bereitstellung ausreichend hoher Temperaturen für eine nachfolgende Abgasreinigung. Hierzu wird der niederdruckseitige Abgasstrom vorteilhaft einem Mittel zur Abgas-Nachbehandlung, insbesondere aus der Gruppe Speicherkatalysator, Reduktionskatalysator oder Partikelfilter, zugeführt.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine schematische Darstellung einer ersten Ausführungsform.
- Fig. 2: zeigt eine schematische Darstellung eines ersten Ausfiührungsbeispiels der Erfindung.
- Fig.3: zeigt eine schematische Darstellung eines zweiten Ausführungsbeispiels.
- Fig. 4: zeigt eine schematische Darstellung eines dritten Ausführungsbeispiel.

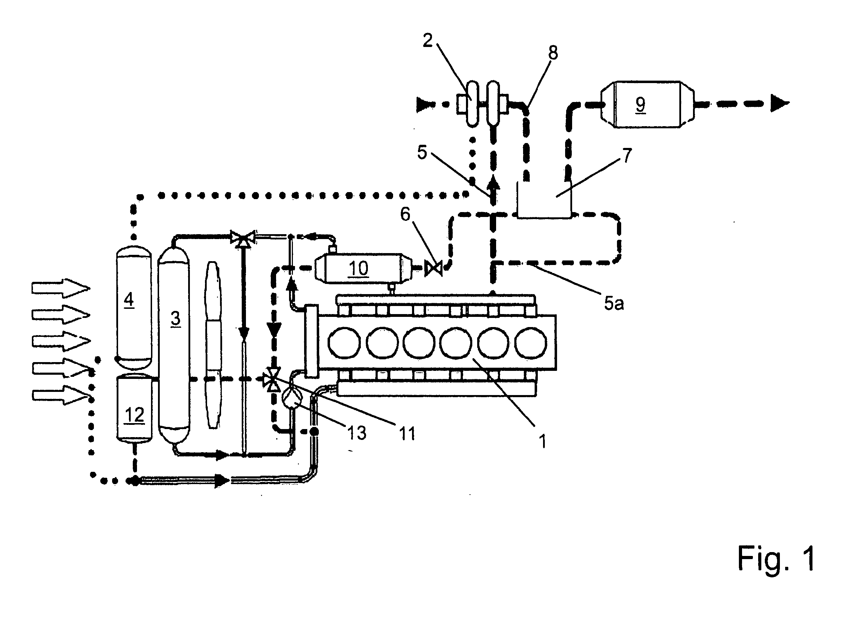

Das Ausführungsbeispiel der Erfindung gemäß Fig. 1 umfasst einen Verbrennungsmotor 1, der vorliegend ein aufgeladener Dieselmotor eine Nutzkraftwagen ist. Abgas des Motors 1 strömt unter hohem Druck und hoher Temperatur in einer Leitung 5 zu einem als Abgas-Turbolader ausgebildeten Verdichter 2 zur Verdichtung von Ladeluft, welche in einem frontseitig des Fahrzeugs vor einem Motor-Kühlmittelkühler 3 angeordneten direkten, also luftumströmten Ladeluftkühler 4 gekühlt wird.

Die hochdruckseitige Leitung 5 hat einen Abzweig, an dem ein Abgasstrom 5a zur Rückführung zum Verbrennungsmotor 1 abgezweigt wird. Die Menge des abgezweigten Abgases ist über ein in der Zweigleitung angeordnetes Ventil 6 regelbar.

Der zur Rückführung abgezweigte Abgasstrom durchströmt zunächst erfindungsgemäß einen Wärmeübertrager 7, der im ersten Ausführungsbeispiel als einzelner Wärmetauscher ausgeformt ist. In dem Wärmeübertrager 7 wird Wärme von dem rückgeführten Abgasstrom auf den bezüglich des Verdichters austrittsseitigen Abgasstrom 8 übertragen. Austrittsseitig des Verdichters 2 ist das Abgas im Regelfall bzw. zumindest im Durchschnitt kühler und hat einen kleineren Druck als eintrittsseitig.

Stromabwärts des Wärmeübertragers 7 durchströmt das niederdruckseitige Abgas ein Mittel zur Abgasreinigung 9, das vorliegend ein Speicherkatalysator, Reduktionskatalysator oder Partikelfilter sein kann.

Der rückgeführte Abgasstrom 5a durchströmt nach Austritt aus dem Wärmeübertrager 7 das Ventil 6 und einen ersten, indirekten Abgaskühler 10. Der Abgaskühler 10 wird zur Wärmeabführung in einer Bypassschaltung von dem Kühlmittel des Motors 1 als Kühlmedium durchströmt, so dass ein Teil der Wärme des Abgases in den von einer Umwälzpumpe 13 betriebenen Kühlmittelkreis eingetragen und letztlich über den Kühlmittelkühler indirekt abgeführt wird. Das Kühlmedium kann dabei im flüssigen und/oder gasförmigen und/oder festen und/oder plasmaförmigen Zustand vorliegen.

Nach dem ersten Abgaskühler 10 strömt das Abgas durch ein 3-Wege-Ventil 11, von wo es je nach Einstellung unmittelbar dem Frischgas bzw. der gekühlten Ladeluft eintrittsseitig des Verbrennungsmotors 1 zuführbar ist oder zunächst noch einen zweiten, direkten oder indirekten Abgaskühler 12 durchströmt. Der zweite Abgaskühler 12 ist neben dem Ladeluftkühler 4 frontseitig des Kühlmittelkühlers 3 angeordnet, so dass er Wärme des Abgases unmittelbar an die Umgebungsluft bzw. den Fahrtwind als Kühlmedium abführt.

Es versteht sich, dass die erfindungsgemäße Anordnung des Wärmeübertragers 7 auch mit jeder anderen geeigneten bekannten Anordnung von nachfolgenden Abgaskühlem 10, 12 bzw. deren Integration in Kühlkreise kombinierbar ist. Der Abgaskühler 12 ist dabei in einer Ausgestaltung ein direkter Abgaskühler. In einer anderen Ausgestaltung ist der Abgaskühler 12 ein indirekter Abgaskühler. In jedem Fall kann dabei ein Teil der Wärme des rückgeführten Abgases auf den bezüglich des Verdichters austrittsseitigen Teil des Abgases übertragen werden.

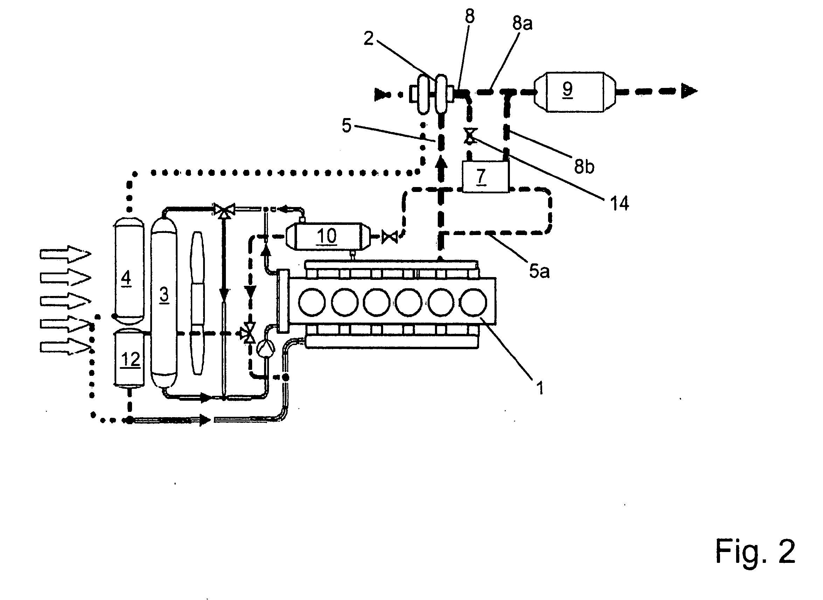

Bei einem zweiten Ausführungsbeispiel gemäß Fig. 2 unterscheidet sich die Vorrichtung vom ersten Ausführungsbeispiel dadurch, dass der bezüglich des Verdichters 2 austrittseitige Abgasstrom 8 in zwei Teilströme 8a, 8b verzweigt ist. Nur einer der Teilströme 8b durchströmt dabei den Wärmeübertrager 7, wobei eine Mengenverteilung auf die Teilströme 8a, 8b über ein Stellglied 14 einstellbar ist, das vorliegend in dem Zweig 8b als Drosselventil ausgebildet ist. Es kann sich aber auch um eine andere Anordnung des Stellglieds 8 handeln oder es kann je nach Anforderungen auch auf ein Stellglied 8 verzichtet werden.

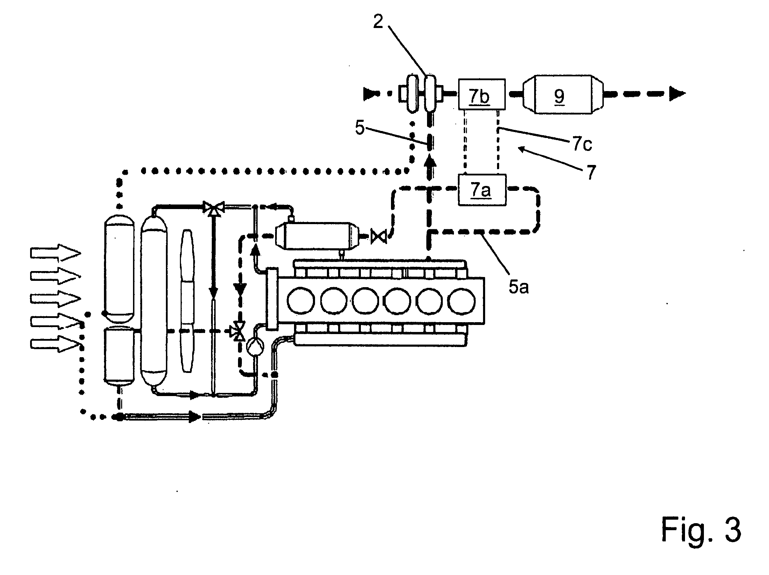

Bei dem dritten Ausführungsbeispiel gemäß Fig. 3 ist der Wärmeübertrager 7 im Unterschied zu dem ersten Ausführungsbeispiel nicht als einzelner Wärmetauscher ausgelegt, sondern als Wärmetauscherkreis mit einem ersten, von dem rückgeführten Abgas 5a durchströmten Wärmetauscher 7a und einem zweiten, von dem niederdruckseitigen Abgas 8 durchströmten Wärmetauscher 7b. Die Wärmetauscher 7a, 7b sind zum Austausch von Wärme über einen Fluidkreislauf 7c eines geeigneten Kühlmittels verbunden und können somit insbesondere räumlich getrennt voneinander angeordnet sein.

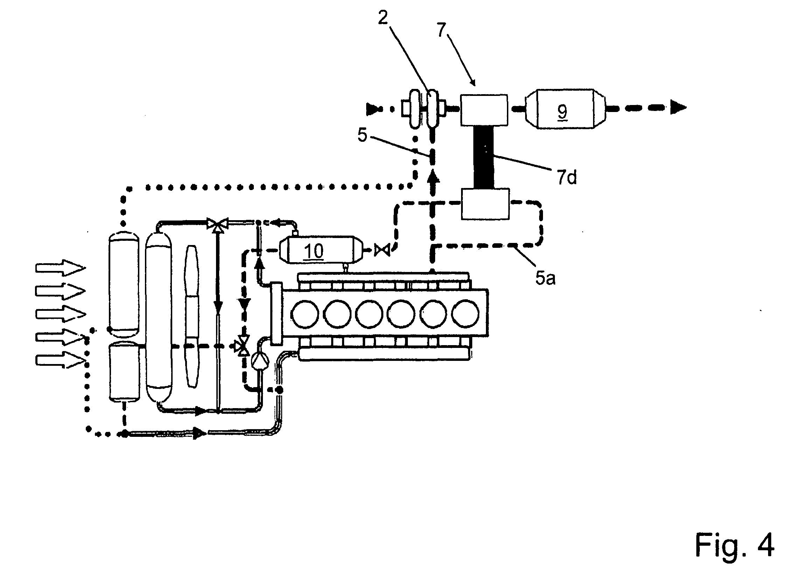

Bei dem vierten Ausführungsbeispiel gemäß Fig. 4 ist der Wärmeübertrager 7 im Unterschied zu dem ersten Ausführungsbeispiel nicht als einfacher Wärmetauscher, sondern als Wärmeübertrager mit einem Wärmerohr (heat pipe) 7d zwischen den Abgasströmen 5a, 8. Das Wärmerohr 7d hat ein entsprechend an die üblichen Temperaturen der Abgasströme 5a, 8 angepasstes Betriebsmittel, so dass eine besonders effektive Wärmeübertragung gewährleistet ist.

Es versteht sich, dass die einzelnen spezifischen Merkmale der beschriebenen Ausführungsbeispiele je nach Anforderungen sinnvoll miteinander kombiniert werden können.

## Patentansprüche

1. Vorrichtung zur Rückführung von Abgas eines Verbrennungsmotors, umfassend
einen abgasgetriebenen Verdichter (2), wobei ein Abgasstrom hochdruckseitig in den Verdichter (2) eintritt und niederdruckseltig aus dem Verdichter (2) austritt,
einen bezüglich des Verdichters (2) hochdruckseitigen Abzweig (6a) für rückgeführtes Abgas, und
zumindest einen Abgaskühler (10, 12) zur Überführung von Wärme aus dem abgezweigten Abgasstrom (6a) in ein Kühlmedium, wobei
ein Wärmeübertrager (7) vorgesehen ist, über den Wärme zwischen dem hochdruckseitig abgezweigten Abgasstrom (5a) und einem bezüglich des Verdichters niederdruckseltigem Abgasstrom (8) übertragbar ist, **dadurch gekennzeichnet, dass** der niederdrucksietige Abgasstrom (8) des Wärmeübertragers (7) ein Teilstrom (8b) des niederdruckseitigen Abgasstroms (8) des Verdichters (2) ist und der Teilstrom (8b) über ein Stellglied (14) einstellbar ist, wobei
der Wärmeübertrager (7) ein einteilig ausgebildeter Wärmetauscher ist, der mit hochdruckseitigern Abgasstrom (5a) und niederdruckseitigern Abgasstrom (8) durchströmbar ist.

2. Vorrichtung zur Rückführung von Abgas eines Verbrennungsmotors, umfassend
einen abgesgetriebenen Verdichter (2), wobei ein Abgasstrom hochdruckseitig in den Verdichter (2) eintritt und niederdruckseitig aus dem Verdichter (2) austritt,
einen bezüglich des Verdichters (2) hochdruckseitigen Abzweig (5a) für rückgeführtes Abgas, und
zumindest einen Abgaskühler (10, 12) zur Überführung von Wärme aus dem abgezweigten Abgasstrom (5a) in ein Kühlmedium,
wobei
ein Wärmeübertrager (7) vorgesehen ist, über den Wärme zwischen dem hochdruckseng abgezweigten Abgasstrom (5a) und einem bezüglich des Verdichters niederdrucksettigem Abgasstrom (8) übertragbar ist, **dadurch gekennzeichnet, dass**
der niederdruckseitige Abgasstrom (8) des Wärmeübertragere (7) ein Teilstrom (8b) des niederdruckseitigen Abgasstroms (8) des Verdichtens (2) ist und
der Teilstrom (8b) über ein stellglied (14) einstellbar ist, wobei der Wärmeübertrager (7) einen niederdruckseitigen Wärmetauscher (7b) und einen hochdruckseitigen Wärmetauscher (7a) umfasst, die über ein Fluid (7c) thermisch verbunden sind.

3. Vorrichtung nach Anspruch 1, **dadurch gekennzeichnet, dass** niederdruckseitig stromabwärts des Wärmeübertragers (7) zumindest ein Mittel zur Abgas-Nachbehandlung (9), insbesondere aus der Gruppe Speicherkatatysator. Reduktionskatalysator oder Partikelfilter, vorgesehen ist.

4. Vorrichtung nach einem der Ansprüche 1 bis 3, **dadurch gekennzeichnet, dass** der Wärmeübertrager (7) einen niederdruckseitigen Wärmetauscher (7b) und einen hochdruckseitigen Wärmetauscher (7a) umfasst, die über ein Fluid (7c) thermisch verbunden sind.

5. Vorrichtung nach einem der vorhergehenden Ansprüche, **dadurch gekennzeichnet, dass** der Wärmeübertrager (7) ein Wärmerohr (7d) umfasst.

6. Vorrichtung nach einem der vorhergehenden Ansprüche, **dadurch gekennzeichnet, dass** der Abgaskühler (10) ein indirekter Abgaskühler zur Übertragung von Wärme an einen Kühlmittelkreis, insbesondere einen Hauptkühlkrelslauf des Verbrennungsmotors (1), ist.

7. Vorrichtung nach einem der vorhergehenden Ansprüche, **dadurch gekennzeichnet, dass** der Abgaskühler (12) ein direkter Abgaskühler zur Übertragung von Wärme auf Umgebungsluft ist.

8. Vorrichtung nach einem der vorhergehenden Ansprüche, **dadurch gekennzeichnet, dass** ein erster, indirekter Abgaskühler (10) und ein zweiter, direkter Abgaskühler (12) vorgesehen sind.

9. Vorrichtung nach einem der Ansprüche 1 bis 7, **dadurch gekennzeichnet, dass** ein erster, indirekter Abgaskühler (10) und ein zweiter, indirekter Abgaskühler (12) vorgesehen sind.

10. Verfahren zur Rückführung von Abgas eines Verbrennungsmotors, insbesondere mittels einer Vorrichtung nach einem der Ansprüche 1 bis 9, umfassend die Schritte:
a. Abzweigen eines rückzuführenden Abgasstroms (5a) hochdruckseitig eines abgaugetriebenen Verdichters (2);
b. Übertragen von Wärme aus dem rückzuführenden Abgasstrom (5a) auf einen Abgasstrom (8) niederdruckseitig des Verdichters (2);
c. Kühlen des rückzuführenden Abgasstroms (5a) mittels eines Abgaskühlers (10,12).

11. Verfahren nach Anspruch 10, **dadurch gekennzeichnet, dass** der niederdruckseitige Abgasstrom (8) einem Mittel zur Abgas-Nachbehandlung (9), insbesondere aus der Gruppe Speicherkatalysator, Reduktionskatalysator oder Partikelfilter, zugeführt wird.

## Claims

1. A device for returning exhaust gas of an internal combustion engine, comprising
a compressor (2) which is driven by exhaust gas, wherein an exhaust-gas flow enters the compressor (2) on the high-pressure side and exits the compressor (2) on the low-pressure side,
a branch (6a) on the high-pressure side with respect to the compressor (2) for returned exhaust gas, and
at least one exhaust-gas cooler (10, 12) for transferring heat from the branched-off exhaust-gas flow (5a) into a cooling medium,
wherein
a heat exchanger (7) is provided, by way of which heat can be transferred between the exhaust-gas flow (5a) that branches off on the high-pressure side and an exhaust-gas flow (8) on the low-pressure side with respect to the compressor, **characterized in that** the low-pressure side exhaust-gas flow (8) of the heat exchanger (7) is a partial flow (8b) of the low-pressure side exhaust-gas flow (8) of the compressor (2), and the partial flow (8b) can be adjusted by way of an actuator (14), wherein the heat exchanger (7) is a heat exchanger designed as one piece, through which high-pressure side exhaust-gas flow (5a) and low-pressure side exhaust-gas flow (8) can flow.

2. A device for returning exhaust gas of an internal combustion engine, comprising
a compressor (2) which is driven by exhaust gas, wherein an exhaust-gas flow enters the compressor (2) on the high-pressure side and exits the compressor (2) on the low-pressure side,
a branch (5a) on the high-pressure side with respect to the compressor (2) for returned exhaust gas, and
at least one exhaust-gas cooler (10, 12) for transferring heat from the branched-off exhaust-gas flow (5a) into a cooling medium,
wherein
a heat exchanger (7) is provided, by way of which heat can be transferred between the exhaust-gas flow (5a) that branches off on the high-pressure side and an exhaust-gas flow (8) on the low-pressure side with respect to the compressor, **characterized in that** the low-pressure side exhaust-gas flow (8) of the heat exchanger (7) is a partial flow (8b) of the low-pressure side exhaust-gas flow (8) of the compressor (2), and the partial flow (8b) can be adjusted by way of an actuator (14), wherein the heat exchanger (7) comprises a low-pressure side heat exchanger (7b) and a high-pressure side heat exchanger (7a), which are thermally connected by way of a fluid (7c).

3. The device according to claim 1 or 2, **characterized in that** at least one means for exhaust-gas treatment (9), in particular from the group comprising an accumulator type catalytic converter, a reduction catalytic converter or a particle filler is provided downstream of the heat exchanger (7) on the low-pressure side.

4. The device according to one of the claims 1 to 3, **characterized in that** the heat exchanger (7) comprises a low-pressure side heat exchanger (7b) and a high-pressure side heat exchanger (7a), which are thermally connected by way of a fluid (7c).

5. The device according to one of the preceding claims, **characterized in that** the heat exchanger (7) comprises a heat pipe (7d).

6. The device according to one of the preceding claims, **characterized in that** the exhaust-gas cooler (10) is an indirect exhaust-gas cooler for transferring heat to a coolant circuit, in particular a main coolant circuit of the internal combustion engine (1).

7. The device according to one of the preceding claims, **characterized in that** the exhaust-gas cooler (12) is a direct exhaust-gas cooler for transferring heat to the surrounding air.

8. The device according to one of the preceding claims, **characterized in that** a first, indirect exhaust-gas cooler (10) and a second, direct exhaust-gas cooler (12) are provided.

9. The device according to one of the claims 1 to 7 , **characterized in that** a first, indirect exhaust-gas cooler (10) and a second, direct exhaust-gas cooler (12) are provided.

10. A method for returning exhaust gas of an internal combustion engine, in particular using a device according to one of the claims 1 to 9, comprising the steps:
a. Branch off an exhaust-gas flow (5a) to be returned, on the high-pressure side of a compressor (2) which is driven by exhaust gas;
b. Transfer heat from the exhaust-gas flow (5a), which is to be returned, to an exhaust-gas flow (8) on the low-pressure side of the compressor (2);
c. Cool the exhaust-gas flow (5a) to be returned using an exhaust-gas cooler (10,12).

11. The method according to claim 10, **characterized in that** the low-pressure side exhaust-gas flow (8) is fed to a means for exhaust-gas treatment (9), in particular from the group comprising an accumulator type catalytic converter, a reduction catalytic converter or a particle filter.

## Revendications

1. Dispositif pour le recyclage de gaz d'échappement d'un moteur à combustion interne, comprenant
un compresseur (2) entraîné par les gaz d'échappement, où un flux de gaz d'échappement entre dans le compresseur (2) côté haute pression et sort du compresseur (2) côté basse pression,
une dérivation (5a) pour les gaz d'échappement recyclés, disposée côté haute pression par rapport au compresseur (2), et
au moins un refroidisseur de gaz d'échappement (10, 12) servant au transfert, dans un milieu de refroidissement, de chaleur provenant du flux de gaz d'échappement (5a) circulant en dérivation,
où il est prévu un échangeur de chaleur (7) par lequel de la chaleur peut être transmise entre le flux de gaz d'échappement (5a) circulant en dérivation côté haute pression, et un flux de gaz d'échappement (8) placé côté basse pression par rapport au compresseur,
**caractérisé en ce que** le flux de gaz d'échappement (8) - côté basse pression - de l'échangeur de chaleur (7) est un flux partiel (8b) du flux de gaz d'échappement (8) - côté basse pression - du compresseur (2), et le flux partiel (8b) est réglable par un actionneur (14), où l'échangeur de chaleur (7) est un échangeur de chaleur configuré en formant un ensemble unitaire qui peut être traversé, côté haute pression, par un flux de gaz d'échappement (5a) et, côté basse pression, par un flux de gaz d'échappement (8).

2. Dispositif pour le recyclage de gaz d'échappement d'un moteur à combustion interne, comprenant
un compresseur (2) entraîné par les gaz d'échappement, où un flux de gaz d'échappement entre dans le compresseur (2) côté haute pression et sort du compresseur (2) côté basse pression,
une dérivation (5a) pour les gaz d'échappement recyclés, disposée côté haute pression par rapport au compresseur (2), et
au moins un refroidisseur de gaz d'échappement (10, 12) servant au transfert, dans un milieu de refroidissement, de chaleur provenant du flux de gaz d'échappement (5a) circulant en dérivation,
où il est prévu un échangeur de chaleur (7) par lequel de la chaleur peut être transmise entre le flux de gaz d'échappement (5a) circulant en dérivation côté haute pression, et un flux de gaz d'échappement (8) placé côté basse pression par rapport au compresseur,
**caractérisé en ce que** le flux de gaz d'échappement (8) - côté basse pression - de l'échangeur de chaleur (7) est un flux partiel (8b) du flux de gaz d'échappement (8) - côté basse pression - du compresseur (2), et le flux partiel (8b) est réglable par un actionneur (14), où l'échangeur de chaleur (7) comprend un échangeur de chaleur (7b) côté basse pression et un échangeur de chaleur (7a) côté haute pression, échangeurs de chaleur qui sont reliés thermiquement par un fluide (7c).

3. Dispositif selon la revendication 1 ou 2, **caractérisé en ce qu'**il est prévu, côté basse pression, en aval de l'échangeur de chaleur (7), au moins un moyen servant au retraitement (9) des gaz d'échappement, en particulier l'un des composants du groupe formé par le catalyser à accumulation, le catalyser de réduction ou le filtre à particules.

4. Dispositif selon l'une quelconque des revendications 1 à 3, **caractérisé en ce que** l'échangeur de chaleur (7) comprend un échangeur de chaleur (7b) côté basse pression et un échangeur de chaleur (7a) côté haute pression, échangeurs de chaleur qui sont reliés thermiquement par un fluide (7c).

5. Dispositif selon l'une quelconque des revendications précédentes, **caractérisé en ce que** l'échangeur de chaleur (7) comprend un tube de chaleur (7d).

6. Dispositif selon l'une quelconque des revendications précédentes, **caractérisé en ce que** le refroidisseur de gaz d'échappement (10) est un refroidisseur de gaz d'échappement indirect servant au transfert de chaleur à un circuit de liquide de refroidissement, en particulier à un circuit de refroidissement principal du moteur à combustion interne (1).

7. Dispositif selon l'une quelconque des revendications précédente, **caractérisé en ce que** le refroidisseur de gaz d'échappement (12) est un refroidisseur de gaz d'échappement direct servant au transfert de chaleur à l'air ambiant.

8. Dispositif selon l'une quelconque des revendications précédentes, **caractérisé en ce qu'**il est prévu un premier refroidisseur de gaz d'échappement indirect (10) et un deuxième refroidisseur de gaz d'échappement direct (12).

9. Dispositif selon l'une quelconque des revendications 1 à 7, **caractérisé en ce qu'**il est prévu un premier refroidisseur de gaz d'échappement indirect (10) et un deuxième refroidisseur de gaz d'échappement indirect (12).

10. Procédé pour le recyclage de gaz d'échappement d'un moteur à combustion interne, en particulier au moyen d'un dispositif selon l'une quelconque des revendications 1 à 9, comprenant les étapes consistant :
a. à faire circuler en dérivation, côté haute pression d'un compresseur (2) entraîné par des gaz d'échappement, un flux de gaz d'échappement (5a) à recycler ;
b. à transmettre de la chaleur provenant du flux de gaz d'échappement (5a) à recycler, à un flux de gaz d'échappement (8) côté basse pression du compresseur (2) ;
c. à refroidir le flux de gaz d'échappement (5a) à recycler, au moyen d'un refroidisseur de gaz d'échappement (10, 12).

11. Procédé selon la revendication 10, **caractérisé en ce que** le flux de gaz d'échappement (8) côté basse pression est fourni à un moyen servant au retraitement (9) des gaz d'échappement, en particulier à l'un des composants du groupe formé par le catalyseur à accumulation, le catalyser de réduction ou le filtre à particules.
